# EUROPÄISCHE PATENTSCHRIFT

(11) **EP 1 961 871 B1**
(45) Veröffentlichungstag und Bekanntmachung des Hinweises auf die Patenterteilung: **10.10.2012**
(21) Anmeldenummer: 07033601.1
(22) Anmeldetag: 01.01.2008
(51) Int. Cl.: E03B 3/11

(54) **Herstellungsverfahren eines Horizontalfilterbrunnen und seine Verwendung**
Constructing method for a pit well with horizontal drain pipes and its use
Procédé de fabrication d'un puits à filtre horizontal et son utilisation

(30) Priorität: 23.02.2007 DE 102007009037; 23.11.2007 AT 71507 U
(43) Veröffentlichungstag der Anmeldung: 27.08.2008
(73) Patentinhaber: Abt Wasser- und Umwelttechnik GmbH, 87719 Mindelheim (DE)
(72) Erfinder: Abt, Johannes, 87719 Mindelheim (DE)
(74) Vertreter: Schorr, Frank Jürgen

(56) Entgegenhaltungen:
- AT-B- 389 135
- DE-A1- 19 516 438
- DE-A1- 19 948 345
- DE-B1- 2 359 231
- DE-C- 975 626
- GB-A- 2 067 233

## Beschreibung

Die Erfindung bezieht sich auf ein Verfahren zum Herstellen eines Horizontalfilterbrunnens, sowie auf einen solcherart herstellbaren Horizontalfilterbrunnen.

Allgemein dienen Horizontalfilterbrunnen dazu, Wasser aus geringmächtigen Aquiferen bereitzustellen. Kürzlich wurde dazu das sogenannte "Hori-Well-Verfahren" beschrieben, dem gemäß, ausgehend von einem Vertikalschacht, gesteuerte Horizontalbohrungen im Vollschnitt-Vortriebsverfahren in der grundwasserführenden Schicht durchgeführt werden (Studie der Fa. Bertram Brunnenbau, September 2006), wobei das Bohrgut zerkleinert und mit einem hydraulischen System abgefördert wird. Die zwischenzeitliche Stabilisierung der Bohrungen erfolgt mit 2 m langen Schutzrohren des Durchmessers 520 mm.

Dieses Verfahren ist sehr aufwändig und kostenintensiv und wird daher als nachteilig empfunden.

Ein anderes bekanntes Verfahren ist aus der Offenlegungsschrift DE 195 16 438 A1 bekannt. Bei diesem Verfahren werden Filterrohre einzeln nacheinander in eine Filterkies-Schicht gedrückt und jeweils in das Vorgängerrohr gesteckt.

Dieses Verfahren ist hinsichtlich der erreichbaren Filterstranglänge und Ergiebigkeit des Brunnens sehr begrenzt, wenn man nicht eine größere Zahl von Vertikalschächten anlegt, was aber die Kosten erhöht.

Ein seit längerem bekannter Horizontalfilterbrunnen (DE 975 626 C) für oberflächennahe Aquifere wird hergestellt, indem ein aus zusammengehängten Rohrstücken bestehender, samt Schachtrohr vorgefertigter Filterrohrstrang in einen ausgehobenen Graben versenkt und der verbleibende Raum mit Kiespackung verfüllt wird.

Gemäß einem anderen, aus dem Dokument DE 199 48 345 A1 bekannten Verfahren wird ein von einer fest haftenden Filterkiesschicht ummantelter Filterrohrstrang in eine zuvor in das Erdreich vorgetriebene Schutzrohrtour verlegt und hernach das Schutzrohr gezogen, so dass das Erdreich an die aufgeklebte Filterkiesschicht grenzt.

Es ist daher eine Aufgabe der Erfindung, ein effizienteres Herstellungsverfahren für einen Horizontalfilterbrunnen sowie eine Verwendung für diesen bereitzustellen.

Zur Lösung der Aufgabe schlägt die Erfindung das Verfahren gemäß Anspruch 1 vor. Die Filterrohre können zugfest und/oder formschlüssig und/oder kraftschlüssig miteinander verbunden, vorzugsweise miteinander verflanscht sein, und können aus Wickeldraht- oder Schlitzbrücken-Filterrohren bestehen oder solche umfassen. Auch Langloch-Schlitzrohre können eingesetzt werden. Der eine bzw. die mehreren Filterkörper sind durch mit Filterkies befüllte Bodenbohrungen bereitgestellt, und weisen jeweils eine Länge, Breite und Höhe auf. Die vertikalen, insbesondere die dem Pumpschacht abgewandten "Quader"- bzw. "Prismen"kanten können abgerundet sein; die vertikalen Seitenflächen des bzw. der Filterkörper sind im allgemeinen nicht völlig eben, sondern je nach dem Verhältnis des Abstands der einzelnen Bodenbohrungen voneinander zu ihrem Radius mehr oder weniger gewellt. Eine Stirnfläche jedes "Quaders" bzw. "Prismas" (begrenzt durch Quer- und Vertikal"kanten") ist dem Pumpschacht zugewandt oder grenzt an ihn.

Dabei kann das Einbringen der Schutzrohre in den Filterkies je nach den Bedingungen wie z.B. dem verwendeten Filterkies und der Horizontaldistanz unter Spülbohren oder ohne Spülfluid erfolgt sein. In beiden Fällen kann dem Schutzrohrstrang eine z.B. konische Spitze zur Verdrängung des Filterkieses vorgesetzt sein. Trotz des im Vergleich mit dem herkömmlichen Hori-Well-Verfahren geringeren Aufwands sind damit überraschend große Distanzen bewältigbar.

Bei nicht zu geringmächtigen Aquiferen ist es vorteilhaft, mehrere horizontale Filterrohrstränge in unterschiedlichen Tiefen anzuordnen, um das Grundwasseraufkommen möglichst effizient zu nutzen.

Ferner ist es vorteilhaft, die Länge, Breite und Höhe des Filterkörpers hinreichend groß dimensioniert vorzusehen, um eine große Wasserfassung zu erreichen. Hierzu können periphere Bodenbohrungen in Mitten-Abständen vorgenommen worden sein, die geringer sind als die Summe der Radien dieser Bodenbohrungen, insbesondere kleiner als 90 % dieser Summe, so dass sich die Bohrungen in einem gewissen Bereich überschneiden. Ein gesondertes Entsanden des Umgebungsbereichs der Filterrohre wird damit unnötig. Ferner ist es vorteilhaft, die größte Höhe des Filterkörpers mehr als anderthalb mal so groß oder sogar mehr als dreimal so groß zu wählen wie seine größte Breite. Damit wird eine große Mantelfläche (laterale Umfangsfläche) des Brunnens erreicht und somit eine große Ergiebigkeit.

Einer der Vorteile des hier vorgeschlagenen Brunnens liegt darin, dass es mit vergleichsweise geringem Aufwand möglich ist, den zu nutzenden Aquifer auch dann bis zu seiner unteren Grenze auszuschöpfen, wenn - wie meistens - diese untere Grenze nicht eben ist, sondern Welligkeiten aufweist, indem solche etwaigen Lageunregelmäßigkeiten im Zuge des Abteufens der Bodenbohrungen auf einfache Weise beseitigt werden. Das herkömmliche Hori-Well-Verfahren erzwingt demgegenüber kompliziertere Maßnahmen, um lateral durch nicht-wasserführende und eventuell feinkörnige, tonige oder gar felsige Schichten zu bohren.

Ein weiterer Vorteil des hier vorgeschlagenen Brunnens ist, dass er vergleichsweise wenig aufwändig hergestellte Filterrohrstränge in verschiedenen Tiefen aufweisen kann, wohingegen gemäß dem herkömmlichen Hori-Well-Verfahren dazu jeweils eine eigene Horizontalbohrung im Vollschnitt-Vortriebsverfahren erforderlich wäre.

Noch ein Vorteil des hier vorgeschlagenen Brunnens liegt darin begründet, dass keine besonderen Vorkehrungen getroffen zu werden brauchen, nach Abschluss der Filterrohreinbringung einen kostspieligen Bohrkopf wie den in dem herkömmlichen Verfahren verwendeten zu bergen, da die bei den zur Herstellung des hier vorgeschlagenen Brunnens zweckmäßig einzusetzenden Verfahren eventuell verwendeten Spülbohrköpfe weniger Wert besitzen und daher ohne Weiteres im Boden verbleiben können.

Schließlich ist ein Vorteil des hier vorgeschlagenen Brunnens darin begründet, dass als Filterrohre einerseits für sich genommen relativ fragile PVC-, Schlitzbrücken-oder Wickeldrahtfilterrohre eingesetzt werden können, die aber andererseits relativ stabil, insbesondere zugfest z.B. mit Flanschen untereinander verbunden sein können. Herkömmlich verwendete steckverbundene Rohre neigen nämlich zu einem Abweichen von der gewünschten Vortriebsrichtung insbesondere nach oben, weil die Steckverbindung der Zugbelastung auf der Krümmungsaußenseite nicht standhält, wenn z.B. auf die Rohrtourspitze eine Querkraft (z.B. nach oben) einwirkt. Daher bewirkt eine solche Querkraft bei herkömmlicherweise verwendeten steckverbundenen Filterrohren ein gewisses Auseinanderrutschen der Rohrstücke auf der Seite der einwirkenden Kraft, und damit eine Krümmung der Rohrtour zur gegenüberliegenden Seite. Eine zugfeste Verbindung hat den Vorteil, dass es beim Vortrieb nicht zu wesentlichen Richtungsabweichungen kommt. Allerdings können bei dem bekannten Verfahren nach DE 195 16 438 A1 keine flanschverbundenen Rohre eingesetzt werden, da diese nicht in den Filterkieskörper eingedrückt werden könnten.

Die Erfindung wird nachfolgend durch Zeichnungen näher erläutert. Hierbei zeigen:
- Figur 1: einen in einem herkömmlichen Verfahren zu verwendenden Bohrkopf;
- Figur 2: ein Flussdiagramm eines zur Herstellung des erfindungsgemäßen Brunnens anwendbares Verfahren;
- Figur 3: ein beispielhaftes Anordnungsschema von Pumpschacht und peripheren Bodenbohrungen in Seitenansicht;
- Figur 4: ein beispielhaftes Anordnungsschema von Pumpschacht und peripheren Bodenbohrungen in Aufsicht; und
- Figur 5: einen Ausschnitt aus Figur 4;
- Figur 6: eine Aufsicht-Skizze einer erfindungsgemäßen Horizontalfilter-Brunnenanlage; und
- Figur 7: eine Detailansicht einer Filterrohrverbindung eines erfindungsgemäßen Brunnens.

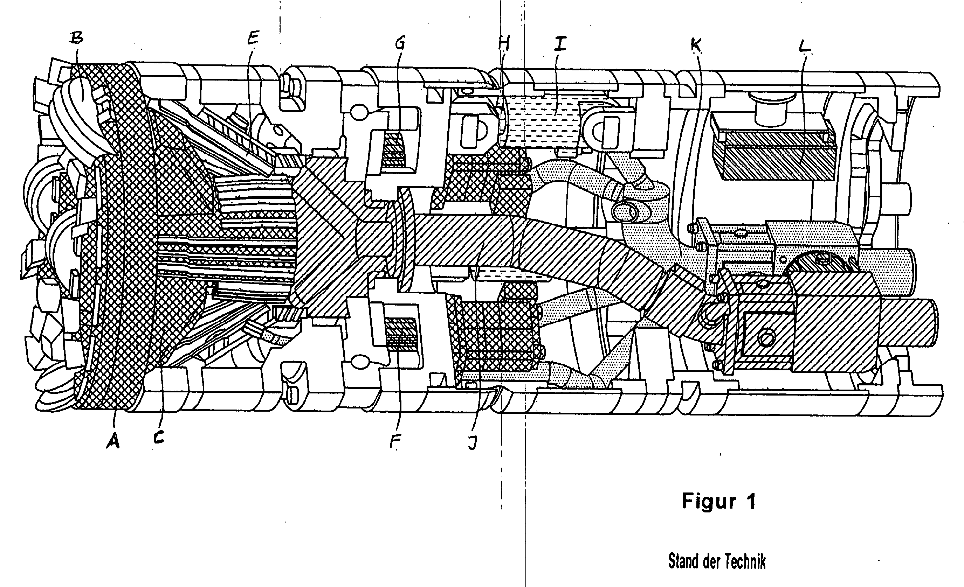

In Figur 1 ist schematisch ein Bohrkopf dargestellt, der für ein herkömmliches Vollschnitt-Vortriebsverfahren verwendet wird: Links ist ein Schneidrad A zu erkennen, das mit einem Abbauwerkzeug B verbunden ist. Dahinter folgt ein Brecherraum C mit Düsen E zur Zerkleinerung größerer Brocken. Dieser Teil wird von einem Drehantrieb F angetrieben und durch ein Hauptlager G gelagert. Der Buchstabe H bezeichnet eine Schildgelenkdichtung, der Buchstabe I einen Steuerzylinder und der Buchstabe J eine ELS-Zieltafel.

Durch die Speiseleitung K wird Wasser zugeführt, und das Bohrgut durch die Förderleitung L abgeführt.

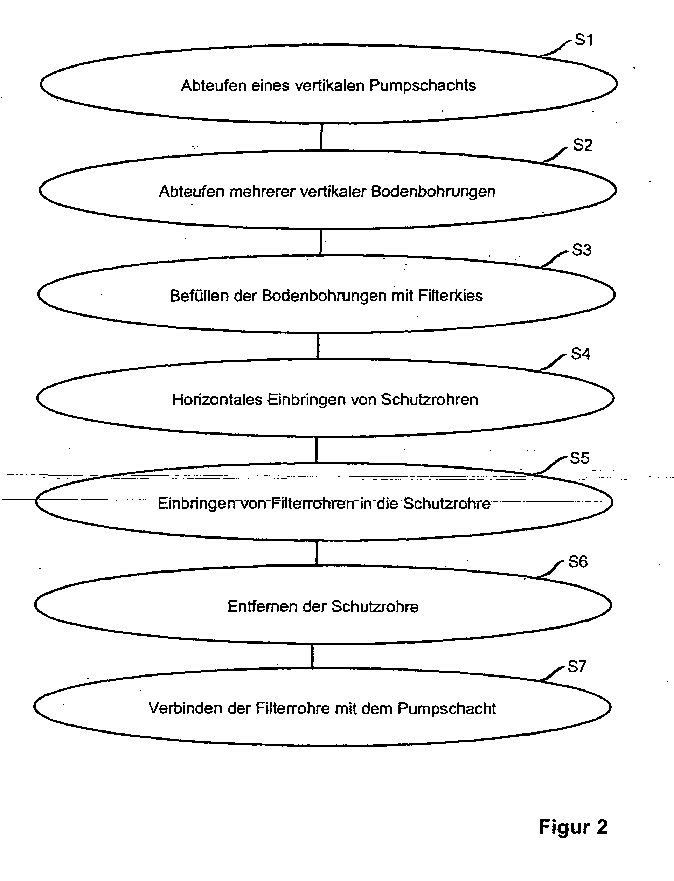

In Figur 2 ist ein Flussdiagramm dargestellt, welches den Ablauf eines zweckmäßigen Herstellungsverfahrens schematisch erläutert, wobei die Abfolge nicht aller einzelnen Schritte entsprechend dem Diagramm festgelegt ist: Zunächst werden ein vertikaler Pumpschacht und periphere Bodenbohrungen abgeteuft (S1, S2). Die Bodenbohrungen werden dann mit Filterkies geeigneter Körnung befüllt (S3); Schritt S3 erfolgt also nach Schritt S2. In die Filterkiesfüllungen werden vom Pumpschacht aus Schutzrohre eingebracht (S4), nämlich durch fluidloses Pressen mittels eines hydraulischen Pressjochs, oder durch Spülbohren; Schritt S4 erfolgt also nach den Schritten S1, S2 und S3. In die Schutzrohre werden Filterrohre eingebracht (S5) und miteinander zugfest verbunden, und die Schutzrohre (ggf. ohne Spitze) danach wieder entfernt (S6). Schließlich werden die Filterrohre mit dem Pumpschacht verbunden, damit aus ihnen Wasser gefördert werden kann.

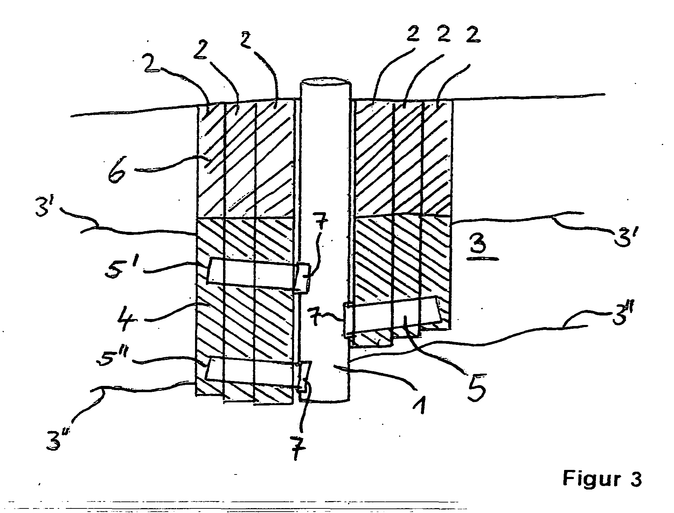

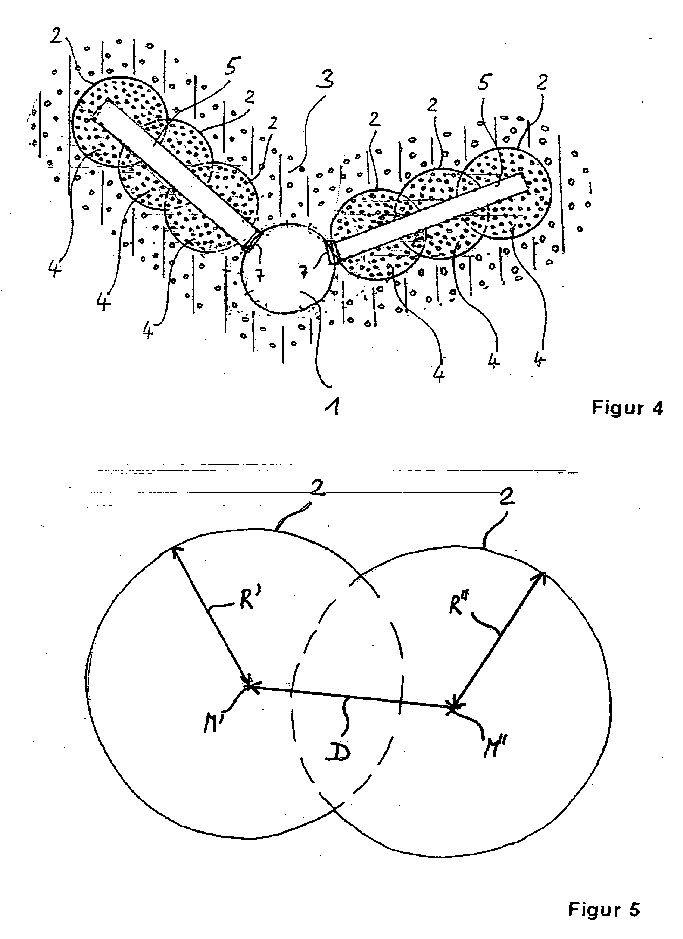

Figur 3 zeigt in Seitenansicht und Figur 4 in Aufsicht ein beispielhaftes Anordnungsschema von Pumpschacht 1 und peripheren Bodenbohrungen 2 in dem Aquifer 3: In der Seitenansicht nach Figur 3 sind die Filterkiesfüllungen 4 der peripheren Bodenbohrungen 2 sowie die oben anschließenden Sand- und Erdfüllungen 6 angedeutet. Zusätzlich oder alternativ können die Bodenbohrungen 2 durch eine Tonlage gegen Verunreinigung von der Oberfläche her geschützt werden. Die radialen Filterrohrstränge 5, 5', 5" des fertiggestellten Brunnens liegen hier zwischen der Obergrenze 3' und der Untergrenze 3" des ursprünglichen Aquifers. Zumindest einige der Bodenbohrungen reichen aber bis unterhalb der ursprünglichen Untergrenze 3" des Aquifers, um den Grundwasserstrom voll zu erfassen. Die beiden Filterrohrstränge 5' und 5" auf der linken Seite liegen direkt übereinander, so dass zwischen ihnen Filterkies angeordnet ist. Mit dem Pumpschacht 1 sind die Filterrohrstränge 5, 5', 5" über Anschlussstücke 7 verbunden. Während der vertikale Schacht 1 nur allenfalls sehr geringfügig von der Lotrechten abweichen sollte, ist es bei den hier als "horizontal" bezeichneten Schutz- und Filterrohrsträngen 5, 5', 5" besser, eine geringe Neigung zur Waagerechten vorzusehen, damit das vom fertiggestellten Brunnen gesammelte Wasser zum Pumpschacht hin abläuft. Eine sinnvolle Neigung liegt hier zwischen 1° und 10° je nach den Umständen, z.B. wenn bei Betrieb des Brunnens mit Materialeintrag gerechnet werden muss und eine gewisse Spülwirkung des geförderten Wassers ausgenutzt werden soll. Diese Neigung kann entlang der Filterrohrstränge 5, 5', 5" variieren und zwischen diesen unterschiedlich sein, z.B. um Welligkeiten der Aquifer-Untergrenze 3" zu folgen. Im Übrigen werden die oberen Filterrohre 5' in einem von der geplanten Wasserentnahmerate und der erwarteten Wasserzustromrate abhängigen Tiefen-Abstand von der Oberkante 3' des ursprünglichen Aquifers 3 eingebracht, denn im Betrieb des Brunnens kommt es zu einer deutlichen Absenkung des Grundwasserspiegels in der Umgebung der Brunnenanlage.

In der Aufsicht gemäß Figur 4 erkennt man die überlappende Anordnung einander benachbarter Bodenbohrungen 2, die durch gestrichelte Kreislinien angedeutet ist, sowie die radiale Ausrichtung der Filterrohrstränge 5 in dem fertiggestellten Brunnen nebst Anschlussstücken 7 zum Pumpschacht. Ebenfalls zu erkennen ist die Filterkies-Umgebung 4 der Filterrohrstränge 5 nach den Seiten, woraus eine verringerte Versandungsneigung resultiert. Die Korngrößen-Untergrenze liegt über der größten Schlitz- oder Lochweite der Filterrohre. Während in dem Beispiel der Figur 4 kein Überschneiden des Pumpschachts 1 mit den angrenzenden Bodenbohrungen 2 vorgesehen ist, wird in einer Variante zunächst wenigstens eine der angrenzenden Bodenbohrungen 2 abgeteuft und mit Filterkies 4 gefüllt, und erst dann der Pumpschacht 1 in Überschneidung mit der wenigstens einen angrenzenden Bodenbohrung 2 abgeteuft. Auf diese Weise ist sichergestellt, dass auch aus der unmittelbaren Umgebung des Pumpschachts 1 kein Sandeintrag in die Filterrohre 5 erfolgt.

In Figur 5 ist gezeigt, dass der Mittenabstand D, gemessen als Abstand zwischen den Bohrlochachsen M' und M" benachbarter Bodenbohrungen 2, geringer ist als die Summe der beiden Bohrlochradien R' und R". Während in dem Beispiel nach den Figuren 4 und 5 alle Bohrlochradien R', R" gleich groß sind, sind in einer Variante nicht alle Bohrlochradien R', R" gleich groß. In dem Beispiel der Figur 5 beträgt der Mittenabstand D etwa 63 % der Radiensumme; in anderen Beispielen kann er aber bis zu 90 % betragen. Wegen des erhöhten Aufwands sind Abstände unter 50 % der Radiensumme ineffizient, Abstände zwischen 60 % und 80 % hingegen bevorzugt. Unter günstigen Bedingungen des Aquifers 3 kann der Abstand D einzelner Bohrlochnachbarn auch etwas (beispielsweise bis zu 10 %, oder bis zu 1 m) größer sein als die Radiensumme R'+R", falls die dann zwischen den Bodenbohrungen 2 bestehen bleibende Erdschicht leicht durchdrungen werden kann und im Brunnenbetrieb kein erheblicher Materialeintrag in die Filterrohre 5 zu befürchten ist.

Die Bohrlochradien R', R" betragen beispielsweise 400 mm bis 800 mm, vorzugsweise 440 mm bis 750 mm, weiter bevorzugt 500 mm bis 650 mm und insbesondere etwa 600 mm. Die Zahl dieser Bohrlöcher hintereinander pro Filterstrang beträgt beispielsweise 15 bis zu (und sogar über) 100; bevorzugt sind Lochzahlen von zwischen 40 und 80. Dabei werden Filterstranglängen von beispielsweise 20 m bis 100 m, vorzugsweise 40 m bis 70 mm erreicht. Der Durchmesser des zentralen Schachts liegt beispielsweise zwischen 2,8 m und 3,5 m, vorzugsweise zwischen 3 m und 3,2 m; die Tiefe der Bodenbohrungen beträgt beispielsweise 7 m bis 20 m, vorzugsweise 10 m bis 15 m, insbesondere bis zu etwa 12 m. Aus den äußeren Abmessungen der Brunnenanlage ergibt sich eine Mantelfläche U von U = (2·Länge+Breite)·Höhe jedes Filterkörpers. Für einen beispielhaften Brunnen beträgt U mehr als 40 m², vorzugsweise mehr als 240 m².

Die Filterrohre haben Durchmesser von beispielsweise 200 mm bis 350 mm, und Wandstärken von beispielsweise 2 mm bis 10 mm. Insbesondere können bei dem erfindungsgemäßen Brunnen auch Schlitzbrücken- oder Wickeldrahtfilter eingesetzt werden, da deren Empfindlichkeit wegen des Einbringens der Filterrohre in Schutzrohre hier eine untergeordnete Rolle spielt. Auch Kunststoffrohre oder Rohre mit Kunststoffendstücken sind einsetzbar. Der Schutzrohr-(außen)durchmesser beträgt beispielsweise 250 mm bis zu 400 mm, insbesondere etwa 50 mm bis 100 mm mehr als der Filterrohr(außen)durchmesser. Die Rohrstücklängen liegen beispielsweise zwischen 1,5 m und 2,5 m. Die einzelnen Rohrstücke sind miteinander zugfest, z.B. über verschraubte Flansche oder Endstücke kraftschlüssig verbunden. Die Rohrstücke können auch, insbesondere wenn es sich um Kunststoffrohre oder Rohre mit Kunststoffendstücken (z.B. aus PVC) handelt, selbst miteinander verschraubt sein, wenn sie Trapez- oder Rohrgewinde (je nach Durchmesser) aufweisen. Es ist zweckmäßig, zwischen die zu verflanschenden Rohrstücke Dichtringe (z.B. der Härte 40°-50° Shore) einzulegen. Ferner ist es erfindungsgemäß vorgesehen, an der Spitze der Filterrohrtour eine ein- oder mehrlippige Dichtung um das vorderste Filterrohr-Teilstück herum anzuordnen, welche den Ringraum zwischen Filterrohr und Bohrrohr (Schutzrohr) abdichtet. Eine bevorzugte Härte dafür ist 50°-60° Shore. Im Übrigen kann das Ende der Filterrohrtour mit einer aufgeschraubten Kappe verschlossen werden. Die Kappe kann je nach Anforderungen Durchführungen oder eine z.B. zentrale Gewindemuffe kleineren Durchmessers aufweisen.

Die Bohrungen werden zweckmäßig im Trockenbohrverfahren, beispielsweise mittels Greifer oder im Schneckenbohrverfahren abgeteuft.

Der eingefüllte Filterkies weist zweckmäßigerweise Korngrößen und -verteilungen entsprechend den Gegebenheiten des Aquifers auf, also beispielsweise eine Verteilung mit jeweils weniger als 10 %, vorzugsweise weniger als 3 %, weiter bevorzugt weniger als 1 % nach Gewicht Unterkorn bzw. Überkorn; wobei die nominelle Korngrößen-Obergrenze jeweils höchstens das Doppelte, vorzugsweise 9/7 bis 16/9 der nominellen Korngrößen-Untergrenze beträgt, beispielsweise eine Obergrenze von 5,6 mm bei einer Untergrenze von 3,15 mm, eine Obergrenze von 8 mm bei einer Untergrenze von 5,6 mm, oder eine Obergrenze von 31,5 mm bei einer Untergrenze von 16 mm. Die Schlitzweite der Schlitzbrückenfilter ist an die nominellen Korngrößen-Untergrenze angepasst, so dass die kleinsten Körner gerade eben nicht in wesentlichem Umfang in die Filterrohre eindringen können. Die Brückenbreite ist demgegenüber größer, um keine deutliche Erhöhung des Wassereintrittswiderstands zu bewirken. Beispielsweise kann eine Schlitzbrückenöffnung 2-3 mm betragen, insbesondere etwa 2,5 mm. Wird ein schlitzgelochtes Flachflanschrohr eingesetzt, so beträgt eine beispielhafte Lochweite 2,5-3,5 mm, vorzugsweise etwa 3 mm, ein Abstand der Lochreihen voneinander 10 bis 30 mm, vorzugsweise etwa 15-20 mm (Mittenabstand), ein Abstand der Löcher innerhalb der Reihen voneinander etwa 30 bis 60 mm (Mittenabstand), und eine Lochlänge 20 bis 40 mm, vorzugsweise etwa 25 mm. Anders ausgedrückt, beträgt der Ende-zu-Ende-Lochabstand in den Reihen 10 bis 30 mm, vorzugsweise etwa 15 mm. Es ist zweckmäßig, flanschseitig jeweils 50 bis 150 mm, bevorzugt 70 bis 100 mm, insbesondere etwa 80 mm ungelocht zu lassen.

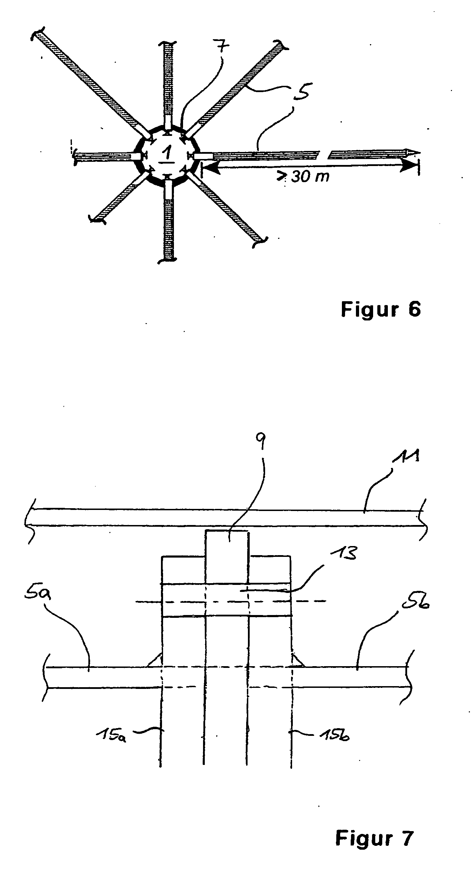

Das erfindungsgemäße Horizontalfilterbrunnen ermöglicht, insbesondere oberflächennahe geringmächtige wasserführende Schichten in optimiertem Maß auszunutzen. Der Brunnen kann mit geringem Aufwand und daher zügig und kostengünstig errichtet werden. Die erreichbaren Abmessungen sind in Figur 6 beispielhaft skizziert. In diesem Beispiel gehen mehrere (acht) Filterrohrstränge 5 strahlenförmig vom zentralen Schacht 1 aus. Für einen der Stränge ist eine Gesamtlänge von über 30 m angegeben.

Ein erfindungsgemäßes Verfahren zur Herstellung des Horizontalfilterbrunnens kann zusammengefasst wie folgt angegeben werden:

Es wird ein im Wesentlichen vertikaler Schacht 1 abgeteuft; es werden mehrere vertikale Bodenbohrungen 2 benachbart zu dem Schacht 1 abgeteuft; die Bodenbohrungen 2 werden mit Filterkies 4 befüllt; vom vertikalen Schacht 1 aus werden in den eingefüllten Filterkies 4 Schutzrohre im Wesentlichen horizontal, insbesondere unter einem Winkel von höchstens 10° zur Waagerechten eingebracht und in die Schutzrohre dann Filterrohre 5, 5', 5"; die Schutzrohre werden entfernt, und die Filterrohre 5, 5', 5" werden mit dem Schacht 1 verbunden. Die Schutzrohre können durch Spülbohren oder durch Pressen ohne Spülfluid eingebracht werden. Ein erster Teil der Filterrohre 5' kann oberhalb eines zweiten Teils der Filterrohre 5" eingebracht werden. In diesem Fall kann zwischen dem ersten Teil der Filterrohre 5' und dem zweiten Teil der Filterrohre 5" Filterkies 4 angeordnet werden. Die Bodenbohrungen können so angeordnet werden, dass wenigstens zwei der Bodenbohrungen 2 einen seitlichen Mitten-Abstand D voneinander haben, der kleiner ist als die Summe der Radien, R'+R", der beiden Bodenbohrungen 2. In diesem Fall ist es bevorzugt, wenn der seitliche Mitten-Abstand D weniger als 90 %, aber mehr als 50 % der Summe der Radien, R'+R", insbesondere 60 % bis 80 % von R'+R" beträgt.

Bevorzugt umfasst das Verfahren das Abteufen wenigstens einer der Bodenbohrungen 2 bis unterhalb des ursprünglichen Aquifers 3 an dieser Stelle. In diesem Fall kann wenigstens eines Teils der Filterrohre 5" so eingebracht werden, dass sie unterhalb des ursprünglichen Aquifers 3 an dieser Stelle zu liegen kommen. Ferner umfasst das Verfahren bevorzugt das Aufbringen einer Deckschicht 6 auf den Filterkies 4. Zum Verbinden der Filterrohre 5, 5', 5'' mit dem Schacht 1 können dichtende Anschlussstücke 7 verwendet und die Anschlussstücke 7 mit einer Pumpe zum Abpumpen des bereitgestellten Wassers verbunden werden.

Ein vorderstes der Filterrohre 5, 5', 5" wenigstens eines Filterrohrstrangs kann 20 m weit oder mehr horizontal eingebracht werden. Wenigstens zwei der Filterrohre 5a, 5b, insbesondere mehr als zwei der Filterrohre können paarweise zugfest, insbesondere kraftschlüssig oder/und formschlüssig miteinander verbunden werden. Insbesondere können die Filterrohre 5a, 5b wie in Figur 7 dargestellt paarweise miteinander verflanscht werden, wobei es bevorzugt ist, wenn zwischen die Flansche 15a, 15b der Filterrohre 5a, 5b Zentrierringe 9 aus einem vorzugsweise elastischen Material eingelegt werden. Die Zentrierringe 9 liegen bis zum Ziehen der Schutzrohre 11 an diesen an und wirken so als Abstandhalter. In den Zentrierringen 9 sind Durchführungen 13 für die Flansch-Verschraubungen (selbst nicht dargestellt) gebildet. Um das vorderste der Filterrohre 5, 5', 5" wird bevorzugt eine ein- oder mehrlippige Dichtung angeordnet, welche den Ringraum zwischen Filter- und Schutzrohrtour 11 bis zum Ziehen der Schutzrohre abdichtet.

Bei dem erfindungsgemäßen Verfahren ist eine zugfeste Verbindung der Filterrohre untereinander nicht unter allen Umständen erforderlich; allerdings wird dadurch ihre Zentrierung innerhalb der Schutzrohrtour vereinfacht, indem z.B. zwischen den Flanschen Zentrierringe eingelegt werden.

Der Filterkörper des erfindungsgemäßen, oder erfindungsgemäß hergestellten Horizontalfilterbrunnens weist eine größte Höhe von wenigstens 1 m, vorzugsweise wenigstens 3 m auf, wobei die Höhe des Filterkörpers zwischen der Deckschicht und der Tiefe der Bodenbohrungen zu messen ist. Diese größte Höhe des Filterkörpers kann mehr als das 1,5fache, insbesondere mehr als das Dreifache einer größten Breite des Filterkörpers betragen. Die Breite des Filterkörpers entspricht, wie aus Figur 5 zu erkennen, dem doppelten Radius der Bodenbohrungen.

Wie auch in der Figur 7 zu erkennen ist, können wenigstens drei, vorzugsweise bis zu acht Filterrohrstränge gleicher oder unterschiedlicher Länge sternförmig angeordnet sein; z.B. ist wenigstens einer der Filterrohrstränge länger als 30 m.

Wenn mehrere Filterrohrstränge (5', 5") in verschiedenen Tiefen angeordnet sind, können diese übereinander angeordnet sein. In diesem Fall kann ein Teil des Filterkieses zwischen den übereinanderliegenden Filterrohrsträngen angeordnet sein.

## Patentansprüche

1. Verfahren zur Herstellung eines Horizontalfilterbrunnens, umfassend:
Abteufen eines vertikalen Schachts (1);
Abteufen mehrerer Bodenbohrungen (2) benachbart zu dem Schacht (1); und
Befüllen der Bodenbohrungen (2) mit Filterkies (4);
**gekennzeichnet durch**
horizontales Einbringen von Schutzrohren (11) vom vertikalen Schacht (1) aus in den eingefüllten Filterkies (4) unter Verdrängung eines Teils desselben unter einem Winkel von höchstens 10° zur Waagerechten;
Einbringen von mindestens zwei paarweise verbundenen Filterrohren (5, 5', 5") in die Schutzrohre (11) und dabei Abdichten des Ringraums zwischen Filter- und Schutzrohrtour (11) mittels einer ein- oder mehrlippigen Dichtung (9), die sich um das vorderste der mindestens zwei Filterrohre (5, 5', 5") erstreckt;
Entfernen der Schutzrohre, so dass die Filterrohre (5, 5', 5") an die Kiesfüllung (4) angrenzen; und
Verbinden der Filterrohre (5, 5', 5") mit dem Schacht (1).

2. Verfahren nach Anspruch 1, wobei die Schutzrohre durch Spülbohren oder alternativ durch Pressen ohne Spülfluid eingebracht werden.

3. Verfahren nach Anspruch 1 oder 2, umfassend Einbringen eines ersten Teils der Filterrohre (5') oberhalb eines zweiten Teils der Filterrohre (5").

4. Verfahren nach einem der vorstehenden Ansprüche, umfassend das Aufbringen einer Deckschicht (6) auf den Filterkies (4).

5. Verwendung des aus dem Verfahren nach einem der Ansprüche 1 bis 4 resultierenden Horizontalfilterbrunnens zum Bereitstellen von Grundwasser.

## Claims

1. A method of constructing a horizontal filter well, comprising
drilling a vertical shaft (1),
drilling plural bore holes (2) adjacent to the shaft (1), and
filling the bore holes (2) with filter gravel (4), **characterized by**
horizontally introducing protective pipes (11) from the vertical shaft (1) into the filled-in filter gravel (4), thereby displacing a part of the same, at an angle not exceeding 10° to the horizontal,
introducing at least two filter pipes (5,5',5") connected in pairs into the protective pipes (11) and, thereby, sealing the annular space between filter pipes and protective pipes by means of a single lip or plural lip seal (9) which extends around the foremost one of the at least two filter pipes (5,5',5"),
removing the protective pipes in order for the filter pipes (5,5',5") to border on the gravel filling (4), and
connecting the filter pipes (5,5',5") with the shaft (1).

2. The method of claim 1, wherein the protective pipes are introduced by flush drilling or, alternatively, by pressing without flushing fluid.

3. The method of claim 1 or 2, comprising introducing a first part of the filter pipes (5') above a second part of the filter pipes (5").

4. The method of one of the preceding claims, comprising depositing a cover layer (6) on the filter gravel (4).

5. Use of a horizontal filter well resulting from the method of one of claims 1 to 4 for the supply of groundwater.

## Revendications

1. Procédé de réalisation d'un puits filtrant horizontal, comprenant:
- le creusement d'un puits vertical (1) ;
- le creusement de plusieurs forages du sol (2) à proximité du puits (1) ; et
- le remplissage des forages du sol (2) par un gravier filtrant (4) ;
**caractérisé par** :
- l'insertion horizontale de tuyaux de protection (11) à partir du puits vertical (1) dans le gravier filtrant de remplissage (4) par la compression d'une partie de celui-ci dans un angle d'au maximum 10° par rapport à l'horizontale ;
- l'insertion d'au moins deux tuyaux de filtration associés par paires (5, 5', 5") dans les tuyaux de protection (11), et dans ce cadre, l'étanchéisation de l'espace annulaire entre le pourtour des tuyaux de filtration et le pourtour des tuyaux de protection (11) au moyen d'un joint à une seule lèvre ou à plusieurs lèvres (9) qui s'étend autour du tuyau le plus en avant des au moins deux tuyaux de filtration (5, 5', 5") ;
- le retrait des tuyaux de protection de sorte que les tuyaux de filtration (5, 5', 5") sont contigus avec le remplissage de gravier (4) ; et
- le raccordement des tuyaux de filtration (5, 5', 5") avec le puits (1).

2. Procédé selon la revendication 1, dans lequel les tuyaux de protection sont insérés par forage avec injection d'eau, ou en variante, par pression sans fluide d'injection.

3. Procédé selon la revendication 1 ou 2, comprenant l'insertion d'une première partie des tuyaux de filtration (5') au-dessus d'une deuxième partie des tuyaux de filtration (5").

4. Procédé selon l'une quelconque des revendications précédentes, comprenant le dépôt d'une couche de couverture (6) par-dessus le gravier filtrant (4).

5. Utilisation du puits filtrant horizontal résultant du procédé selon l'une quelconque des revendications 1 à 4 pour la fourniture d'eau souterraine.
